# EUROPÄISCHE PATENTANMELDUNG

(11) **EP 2 241 681 A1**
(43) Veröffentlichungstag der Anmeldung: **20.10.2010**
(21) Anmeldenummer: 10003004.8
(22) Anmeldetag: 22.03.2010
(51) Int. Cl.: E02F 9/02, E02F 9/08

(54) **Bagger**

(30) Priorität: 14.04.2009 DE 202009005597 U
(71) Anmelder: Liebherr-Hydraulikbagger GmbH, 88457 Kirchdorf/Iller (DE)
(72) Erfinder: Bolz, Gerhard, 88457 Kirchdorf/Iller (DE); Miller, Alfred, 88430 Haslach (DE); Niederer, Marco, 88451 Dettingen an der Iller (DE)
(74) Vertreter: Laufhütte, Dieter

(57) **Zusammenfassung**

Die vorliegende Erfindung betrifft einen Bagger (1), mit einem Unterwagen (2), einem Oberwagen und einem im oder am Oberwagen angeordneten Verbrennungsmotor zum Antrieb des Baggers (2), wobei wenigstens ein Kraftstofftank (6) zur Versorgung des Verbrennungsmotors mit Kraftstoff im oder/und am Unterwagen (2) des Baggers (1) angeordnet ist.

## Beschreibung

Die vorliegende Erfindung betrifft einen Bagger mit einem Unterwagen, einem Oberwagen und einem im oder am Oberwagen angeordneten Verbrennungsmotor zum Antrieb des Baggers.

Bagger weisen üblicherweise einen Unterwagen und einen Oberwagen auf, wobei auf dem Oberwagen neben der Fahrerkabine und dem Ausleger weitere Baugruppen wie Motor, Pumpe, Kühler und Kraftstofftanks angeordnet sind. In der vorliegenden Beschreibung sind als Bagger beispielsweise Mobilbagger und Raupenbagger aufgeführt, die auf einen entsprechenden Baggerunterwagen aufgebaut sind. Der Gegenstand der vorliegenden Anmeldung bezieht sich aber auch auf Raupenkrane und anderweitige Arbeitsgeräte, die einen entsprechenden Aufbau mit Unterwagen und Oberwagen aufweisen.

All diesen Geräten ist es gemein, dass Ihnen auf dem Oberwagen aufgrund der maximalen Transportabmessungen nur begrenzt Platz zur Verfügung steht. Daher muss der zur Verfügung stehende Bauraum auf dem Oberwagen optimal genutzt werden, um sämtliche dort unterzubringenden Baugruppen korrekt anzuordnen. Bei den bekannten Bauformen ist oftmals ein großer Anteil des Raumes an der Seite des Oberwagens durch den Kraftstofftank belegt.

Als problematisch stellt sich hierbei jedoch heraus, dass die im mittleren Bereich des Oberwagens angeordneten Baugruppen, wie Verbrennungsmotor, Pumpe, Kühler bzw. andere Baugruppen, nur schwer zugänglich sind. Dies stellt sich insbesondere bei der Wartung der angeordneten Baugruppen als äußerst unpraktisch dar. Weiterhin ist das Hinzufügen neuer bzw. weiterer Baugruppen zum Betrieb des Baggers auf den Oberwagen des Baggers aufgrund des Platzmangels nicht möglich bzw. nur durch den Verzicht anderer Baugruppen realisierbar.

Aufgabe der vorliegenden Erfindung ist es, einen Bagger der bekannten Bauart derart weiterzubilden, dass durch die Umstrukturierung der Bauteile auf dem Oberwagen eine Platzersparnis erzielt wird. Weiterhin soll die regelmäßige Wartung der zu wartenden Bauteile auf dem Oberwagen vereinfacht werden.

Erfindungsgemäß wird diese Aufgabe durch die Kombination der Merkmale des Anspruchs 1 gelöst.

Demnach wird bei einem Bagger mit einem Unterwagen, einem Oberwagen und einem im oder am Oberwagen angeordneten Verbrennungsmotor zum Antrieb des Baggers wenigstens ein Kraftstofftank zur Versorgung des Verbrennungsmotors mit Kraftstoff im oder/und am Unterwagen des Mobilbaggers angeordnet. Dadurch, dass der Kraftstofftank im Unterwagen angeordnet wird, ergibt sich auf dem Oberwagen eine Platzersparnis, die für andere, neue Komponenten genutzt werden kann. Weiterhin wird die Zugänglichkeit sämtlicher auf dem Oberwagen integrierten Baugruppen vereinfacht, da die Verlagerung des Kraftstofftanks in den Unterwagen des Baggers die räumliche Anordnung der einzelnen Bauteile vereinfacht. Als weiterer Vorteil ist die bessere Betankungsmöglichkeit im Hinblick auf Sicherheit des Bedienpersonals zu nennen, da die Erreichbarkeit des Kraftstofftanks durch die Verlagerung in den Unterwagen deutlich verbessert wird. Im Gegensatz zu Baggern nach dem Stand der Technik muss das Bedienpersonal bei der Ausführung des Tankvorgangs nicht den Kraftstofftank auf dem erhöhten Oberwagen erreichen, vielmehr ist die Betankung des Baggers mit der Betankung eines herkömmlichen Kraftfahrzeugs vergleichbar.

Vorteilhafterweise ist wenigstens ein Kraftstoffbehälter außerhalb am Unterwagen des Baggers angeordnet. In der vorliegenden Beschreibung soll der Begriff des Kraftstofftanks auf eine beliebige Vorrichtung zur Aufnahme des Kraftstoffs hinweisen. Der Begriff des Kraftstoffbehälters hingegen weist auf einen zusätzlich hinzugefügten Behälter zur Aufnahme des Kraftstoffs hin. Dieser Behälter ist nicht standardmäßig am Unterwagen des Baggers installiert, sondern ist tatsächlich zur ausschließlichen Aufnahme von Kraftstoff bestimmt. Durch die Anordnung eines Kraftstoffbehälters zur Aufnahme des Kraftstoffes außerhalb am Unterwagen wird die Zugänglichkeit des Kraftstofftanks des Baggers bei einem Tankvorgang wesentlich gesteigert. Darüber hinaus ist die Wartung des Behälters sehr einfach, da der Behälter bei Bedarf einfach vom Unterwagen abgenommen werden kann. Auch ist das Nachrüsten von nach dem Stand der Technik bekannter Bagger zu einem erfindungsgemäßen Bagger mit einem am Unterwagen angeordneten Kraftstoffbehälter jederzeit durchführbar und erfordert keine Neuausrichtung bzw. massiven Umbauten des Unterwagens. Darüber hinaus ist die Mobilität des Baggers durch die Verlagerung des Kraftstofftanks an den Unterwagen des Baggers in Form eines Kraftstoffbehälters in keinster Weise beschränkt oder beeinträchtigt.

Gemäß einer bevorzugten Ausgestaltung der Erfindung ist wenigstens ein Kraftstoffbehälter zumindest teilweise in den Unterwagen integriert. Der Unterwagen eines Baggers weist oftmals unbenutzte Hohlräume auf, die zur zumindest teilweisen Aufnahme eines Kraftstoffbehälters geeignet sind. Durch die Integration des Kraftstoffbehälters in den Unterwagen ergibt sich ebenfalls eine Platzersparnis am Unterwagen. Denkbar ist hierbei, dass nur gewisse Teile des Kraftstoffbehälters in den Unterwagen integriert sind und der restliche Anteil des Kraftstoffbehälters außerhalb am Unterwagen angeordnet ist. Zur vollständigen Platzersparnis ist auch die vollständige Integration des Kraftstoffbehälters in die Hohlräume des Unterwagens möglich.

Oftmals ist auch die zumindest teilweise Integration des Kraftstoffbehälters in beliebige Anbauteile des Unterwagens vorteilhaft. Dabei üben diese beliebigen Anbauteile weiterhin ihre ursprüngliche Funktion aus, dienen jedoch zusätzlich zur Aufnahme von Kraftstoff zur Versorgung des Verbrennungsmotors des erfindungsgemäßen Baggers.

In einer weiteren bevorzugten Ausgestaltung der Erfindung ist der Kraftstofftank als integriertes Volumen innerhalb Teilen des Unterwagens vorgesehen. Dabei wird die Kraftstoffmenge zur Versorgung des Verbrennungsmotors des Baggers einfach in die ungenutzten Hohlräume des Unterwagens gefüllt. Denkbar ist hierbei, dass der Kraftstoff in begrenzte Abschnitte des Unterwagens eingefüllt wird. Ebenfalls ist die Nutzung des Gesamtvolumens des Gesamtunterwagens zur Befüllung mit Kraftstoff vorstellbar. Selbstverständlich ist auch die Nutzung der Hohlräume der beliebigen Anbauteile des Unterwagens denkbar. Durch die genannte Ausgestaltung der Erfindung kann auf den Einbau eines extra angefertigten Kraftstoffbehälters verzichtet werden. Durch die Nutzung vorhandener Hohlräume bzw. Volumina des Unterwagens kann das Gesamtgewicht des Baggers um das Gewicht des Kraftstoffbehälters reduziert werden.

Vorteilhafterweise ist das integrierte Volumen innerhalb des Unterwagens mittels Dichtschweißen von Teilen des Unterwagens abgedichtet und mit Kraftstoff befüllbar. Das Dichtschweißen des Unterwagens bietet bei der Produktion des Unterwagens eine denkbar einfache Methode, um die Hohlräume innerhalb des Unterwagens so abzudichten, dass eine sichere Aufnahme des Kraftstoffs innerhalb des Unterwagens gewährleistet ist. Denkbar ist ebenfalls, dass nur gewisse Teile des Unterwagens dicht geschweißt werden bzw. spezielle Teile des Unterwagens durch Hinzufügen von Trennwänden vom restlichen Bereich des Unterwagens abgetrennt werden. Ebenfalls können die Volumina der beliebigen Anbauteile des Unterwagens durch Dichtschweißen abgedichtet werden.

Um eine reibungslose Versorgung des Verbrennungsmotors im Oberwagen durch den in den Unterwagen verlagerten Kraftstofftank bzw. Kraftstoffbehälter sicherzustellen, ist wenigstens eine Kraftstoffversorgungsleitung vom Unterwagen zum Oberwagen geführt, welche mittelbar oder unmittelbar mit dem Kraftstofftank/Kraftstoffbehälter verbunden ist. Bevorzugt wird diese Versorgungsleitung vom Kraftstofftank bzw. Kraftstoffbehälter innerhalb des Drehkranzes vom Unterwagen zum Oberwagen geführt und dann unmittelbar/mittelbar mit dem Verbrennungsmotor standardmäßig verbunden. Es sei zu erwähnen, dass durch die Verlegung der Versorgungsleitung durch den Drehkranz des Baggers, die Drehbewegung des Oberwagens um eine definierte Drehachse um den Unterwagen in keiner Weise beeinträchtigt wird.

Vorteilhafterweise ist wenigstens eine Kraftstoffpumpe im Unterwagen des Baggers angeordnet und eingangsseitig mittelbar oder unmittelbar mit dem Kraftstofftank bzw. Kraftstoffbehälter und ausgangsseitig mit der Kraftstoffversorgungsleitung verbunden. Durch die Kraftstoffpumpe wird der eingefüllte Kraftstoff im Kraftstofftank bzw. Kraftstoffbehälter über die Kraftstoffversorgungsleitung durch den Drehkranz in den Oberwagen zum Verbrennungsmotor gepumpt.

Vorteilhafterweise ist der Kraftstoff periodisch oder zyklisch vom Kraftstofftank bzw. Kraftstoffbehälter aus dem Unterwagen zum Verbrennungsmotor beförderbar. Die zeitlichen Abstände zwischen den periodischen bzw. zyklischen Kraftstofffluss vom Unterwagen in den Oberwagen sind dabei in Abhängigkeit der Betriebsparameter des Verbrennungsmotors eingestellt.

Möglich ist auch, dass der Kraftstoff kontinuierlich vom Kraftstofftank bzw. Kraftstoffbehälter zum im Oberwagen angeordneten Verbrennungsmotor beförderbar ist.

In einer weiteren vorteilhaften Ausgestaltung der Erfindung ist mindestens ein Kraftstoffzwischentank im Oberwagen angeordnet. Der im Oberwagen angeordnete Kraftstoffzwischentank erfüllt dabei die Funktion eines Kraftstoffzwischenpuffers, d. h. der vom im Unterwagen angeordneten Kraftstofftank bzw. Kraftstoffbehälter beförderte Kraftstoff wird in dem Kraftstoffzwischentank im Oberwagen zwischengespeichert und von dort aus in den Verbrennungsmotor gefördert. Durch die Zwischenpufferung des Kraftstoffs im Kraftstoffzwischentank wird sichergestellt, dass auch bei kurzzeitiger Unterbrechung der Kraftstoffversorgungsleitungen vom Unterwagen zum Oberwagen bzw. zum Kraftstoffzwischentank eine Versorgung des Verbrennungsmotors mit Kraftstoff gegeben ist. Dabei fällt das Größenverhältnis zwischen Kraftstoffzwischentank und Kraftstofftank bzw. Kraftstoffbehälter stark zugunsten des Kraftstofftanks bzw. -behälters im Unterwagen aus. Der Kraftstoffzwischentank dient dabei lediglich zur Aufnahme einer minimalen Kraftstoffmenge, da ansonsten die gewonnene Platzersparnis im Oberwagen hinfällig ist.

Vorteilhafterweise ist der Kraftstoff periodisch oder zyklisch vom Kraftstofftank bzw. Kraftstoffbehälter im Unterwagen zum Kraftstoffzwischentank im Oberwagen beförderbar. Denkbar ist selbstverständlich auch, dass der Kraftstoff kontinuierlich vom Kraftstofftank bzw. Kraftstoffbehälter im Unterwagen zum Kraftstoffzwischentank im Oberwagen beförderbar ist. Bei beiden Varianten ist darauf zu achten, dass ein Überlaufen des Kraftstoffzwischentanks im Oberwagen vermieden wird. Der Kraftstofffluss vom Kraftstofftank bzw. Kraftstoffbehälter im Unterwagen ist dementsprechend so anzupassen, dass der Füllstand im Kraftstoffzwischentank möglichst konstant gehalten wird, und eine durchgehende, ununterbrochene Kraftstoffversorgung des Verbrennungsmotors gewährleistet ist.

In einer besonders vorteilhaften Ausgestaltung der Erfindung ist der erfindungsgemäße Bagger als ein Raupenbagger ausgeführt und der im Unterwagen integrierte Kraftstofftank erschließt das Volumen des Unterwagens zwischen den Raupenschiffen. Durch die Verlegung des Kraftstofftanks in den Unterwagen des Raupenbaggers wird eine beträchtliche Platzersparnis im Oberwagen des Raupenbaggers erzielt, wodurch die Anordnung weiterer neuer Komponenten im Oberwagen des Raupenbaggers Platz findet. Weiterhin wird der Antriebe des Raupenbaggers, d. h. der Kettenantrieb der Raupe, durch die Verlagerung des Kraftstofftanks in den Unterwagen weder beschränkt noch behindert.

In einer anderen Ausgestaltungsmöglichkeit des erfindungsgemäßen Baggers ist der Bagger als ein Mobilbagger ausgeführt und jeweils ein Kraftstoffbehälter zwischen der Vorder- und Hinterachse seitlich am Unterwagen des Autobaggers angeordnet. Dadurch ergeben sich bei diesem Mobilbagger ebenfalls die Vorteile der erfindungsgemäßen Verlagerung des Kraftstofftanks in den Unterwagen des Baggers, sowie ein erheblicher Vorteil bei der Betankung des Mobilbaggers.

Weitere Merkmale, Einzelheiten und Vorteile der Erfindung werden anhand der in den Zeichnungen dargestellten Ausführungsbeispiele näher erläutert. Es zeigen:
- Figur 1:: eine Draufsicht auf den Unterwagen eines Mobilbaggers,
- Figur 2:: eine Seitenansicht des Unterwagens des Mobilbaggers aus Figur 1,
- Figur 3:: eine Draufsicht auf den Unterwagen eines Raupenbaggers,
- Figur 4:: eine Seitenansicht des Unterwagens des Raupenbaggers aus Figur 3,
- Figur 5:: eine Draufsicht auf einen weiteren Unterwagen eines weiteren Raupenbaggers,
- Figur 6:: eine Seitenansicht des Unterwagens aus Figur 5,
- Figur 7:: eine Draufsicht auf einen dritten Unterwagen eines dritten Raupenbaggers und
- Figur 8:: eine Seitenansicht des Unterwagens aus Figur 7.

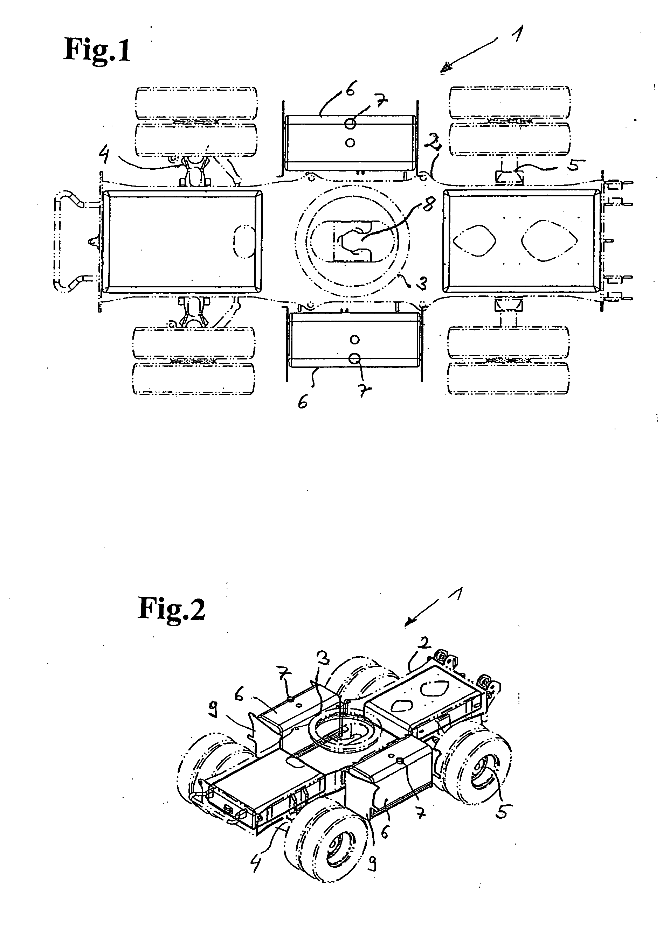

Der in den Figuren 1 und 2 dargestellte Mobilbagger 1 weist in üblicher Weise einen Unterwagen 2 und einen nicht dargestellten Oberwagen auf. Der Unterwagen 2 weist ein Mobilbaggerfahrwerk auf, das eine Vorderachse 4 und einer Hinterachse 5 vorsieht. Auf dem Unterwagen 2 ist der Oberwagen drehbar um eine vertikale Drehachse gegenüber dem Unterwagen 2 auf dem Drehkranz 3 aufsetzbar. Der nicht dargestellte Oberwagen weist neben dem Fahrerhaus und dem Ausleger eine Reihe von Komponenten auf, die aus Verbrennungsmotor, Pumpen, Kühlern und dergleichen bestehen. Im hinteren Bereich des Oberwagens können in bekannter Art und Weise Gegengewichte angeordnet sein.

Erfindungsgemäß sind bei dem Mobilbagger 1 der Figuren 1 und 2 zwei Kraftstoffbehälter 6 aus dem Oberwagen zum Unterwagen 2 verlagert und an diesem fest angeordnet. Dabei befindet sich jeweils ein Kraftstoffbehälter 6 seitlich am Unterwagen 2 zwischen der Vorderachse 4 und der Hinterachse 5 des Unterwagens 2. Zur Fixierung bzw. Befestigung der Kraftstoffbehälter 6 am Unterwagen 2 des Mobilbaggers 1 dienen zwei Aufnahmen 9, welche fest mit dem Unterwagen 2 verschweißt sind. Beide Kraftstoffbehälter 6 weisen jeweils einen Einfüllstutzen 7 auf, der zur Befüllung des Kraftstoffbehälters 6 mit Kraftstoff dient. Der durch die Verlagerung des Kraftstofftanks in den Unterwagen 2 des Mobilbaggers 1 frei gewordene Platz im nicht dargestellten Oberwagen des Mobilbaggers 1 kann durch das Hinzufügen weiterer, neuer Komponenten zum Betrieb des Mobilbaggers genutzt werden. Weiterhin wird die Wartung sonstiger im Oberwagen angeordneter Bauteile vereinfacht, da deren Zugänglichkeit durch die Verlagerung des Kraftstofftanks in den Unterwagen 2 des Mobilbaggers 1 verbessert wurde.

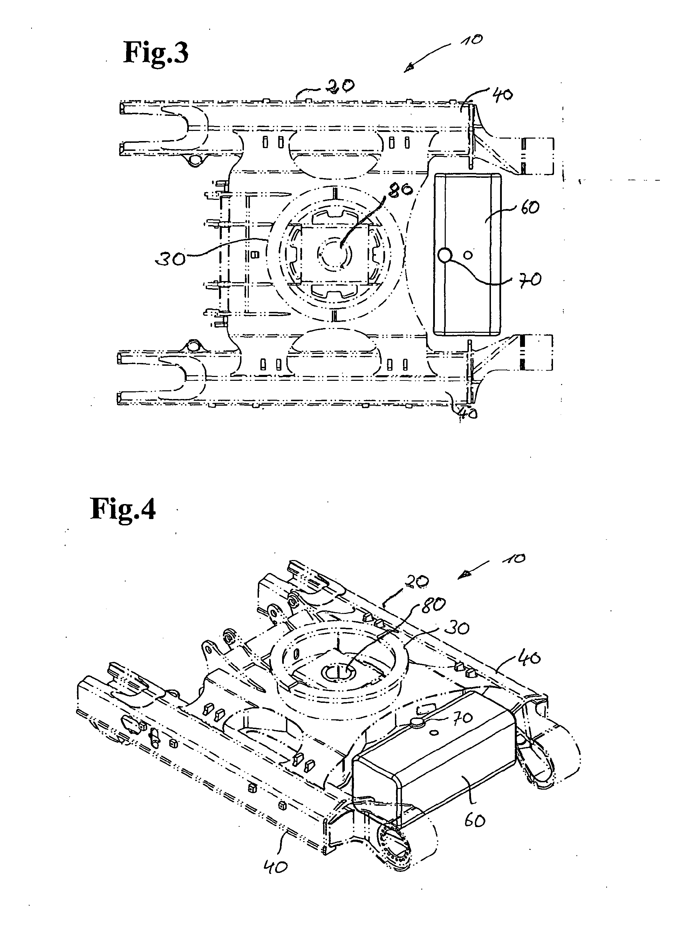

Die weiteren Figuren 3 bis 8 stellen einen Raupenbagger 10 dar, der ebenfalls in üblicher Weise einen Unterwagen 20 und einen mittels des Drehkranzes 30 beweglich befestigten nicht dargestellten Oberwagen aufweist. Dabei sieht der Unterwagen 20 ein Raupenfahrwerk vor, das die zwei Raupenschiffe 40 sowie die nicht dargestellte Raupenkette und deren Antriebsvorrichtung vorsieht. Der nicht dargestellte Oberwagen weist ebenfalls neben dem Fahrerhaus und dem Ausleger eine Reihe von Komponenten auf, die aus Motoren, Pumpen, Kühler und dergleichen bestehen. Wie bei dem Oberwagen des Mobilbaggers 1 aus den Figuren 1 und 2 können im hinteren Bereich des Oberwagens in bekannter Art und Weise Gegengewichte angeordnet sein.

Erfindungsgemäß wird bei dem Raupenbagger 10 aus den Figuren 3 bis 8 ebenfalls der Kraftstofftank aus dem Oberwagen in den Unterwagen 20 verlagert, wodurch eine erhebliche Platzersparnis im Oberwagen erzielt wird. Die erste Ausgestaltungsmöglichkeit des Raupenbaggers ist in den Figuren 3 und 4 dargestellt. Dabei wird ein Kraftstoffbehälter 60 außerhalb des Unterwagens 20 fest an diesen angeordnet, wobei der Kraftstoffbehälter 60 zwischen den Raupenschiffen 40 im hinteren Teil des Unterwagens 20 fest an den Unterwagen 20 angeordnet wird. Grundsätzlich gilt, dass der Kraftstoffbehälter an jeder geeigneten Stelle des Unterwagens angeordnet werden kann. Durch eine derartige Anordnung des Kraftstoffbehälters 60 wird die Mobilität des Raupenkrans 10 nicht eingeschränkt. Der Kraftstoffbehälter 60 weist einen Einfüllstutzen 70 zur Befüllung des Kraftstoffbehälters 60 mit Kraftstoff auf. Wie aus den beiden Figuren 3 und 4 ersichtlich wird, ist der Kraftstoffbehälter 60 für das Bedienpersonal zum Auftanken des Raupenbaggers leicht zugänglich.

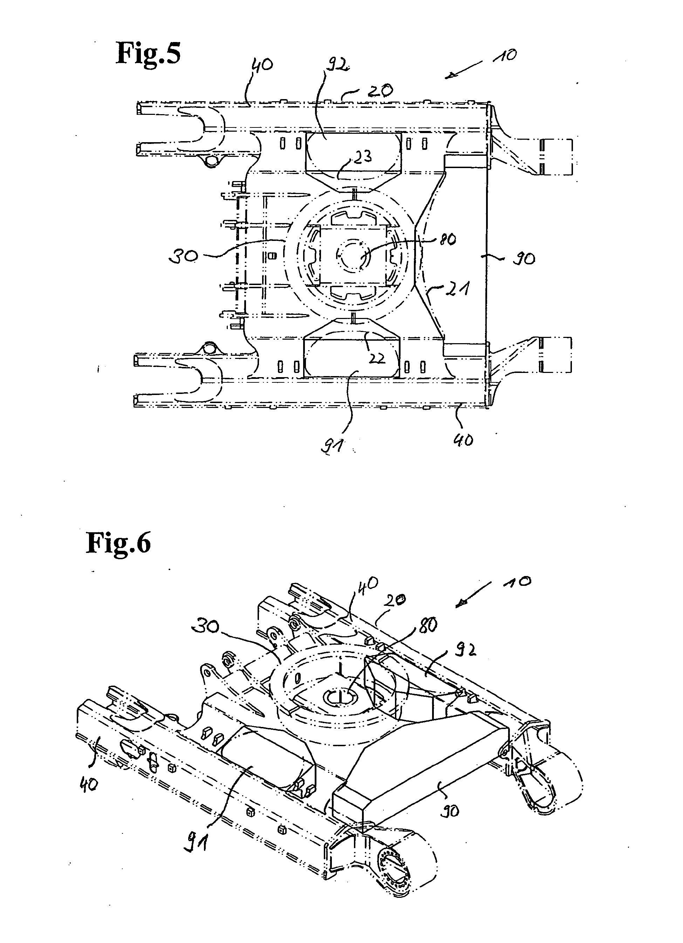

In den Figuren 5 und 6 ist eine weitere Ausgestaltungsmöglichkeit des erfindungsgemäßen Raupenbaggers gezeigt, die eine zumindest teilweise Integration des Kraftstoffbehälters 90 in den Unterwagen 20 des Raupenbaggers 10 vorsieht. In Figur 5 ist deutlich zu erkennen, dass der Kraftstoffbehälter 90 zusätzlich die zwei weiteren Behälter 91 und 92 umfasst. Alle drei Kraftstoffbehälter 90, 91, 92 sind zumindest teilweise in den Unterwagen 20 des Raupenbaggers 10 integriert. Die gestrichelten Linien 21, 22 und 23 aus Figur 5 deuten dabei die Schnittelinie der Kraftstoffbehälter 90, 91, 92 mit dem Unterwagen 20 an. Die Teilbereiche der Kraftstoffbehälter 90, 91, 92, die auf der zum Drehkranz 30 näher liegenden Seite der Schnittlinien 21, 22, 23 liegen, befinden sich innerhalb des Unterwagens 20, d. h. sie sind in den Unterwagen 20 integriert. Die einzelnen Kraftstoffbehälter können miteinander verbunden sein, so dass ein Kraftstofffluss von einem Kraftstoffbehälter zu nächsten erfolgen kann. Denkbar ist jedoch auch, dass eine separate, unabhängige Versorgung des Verbrennungsmotors mit Kraftstoff aus jedem einzelnen der Kraftstoffbehälter möglich ist.

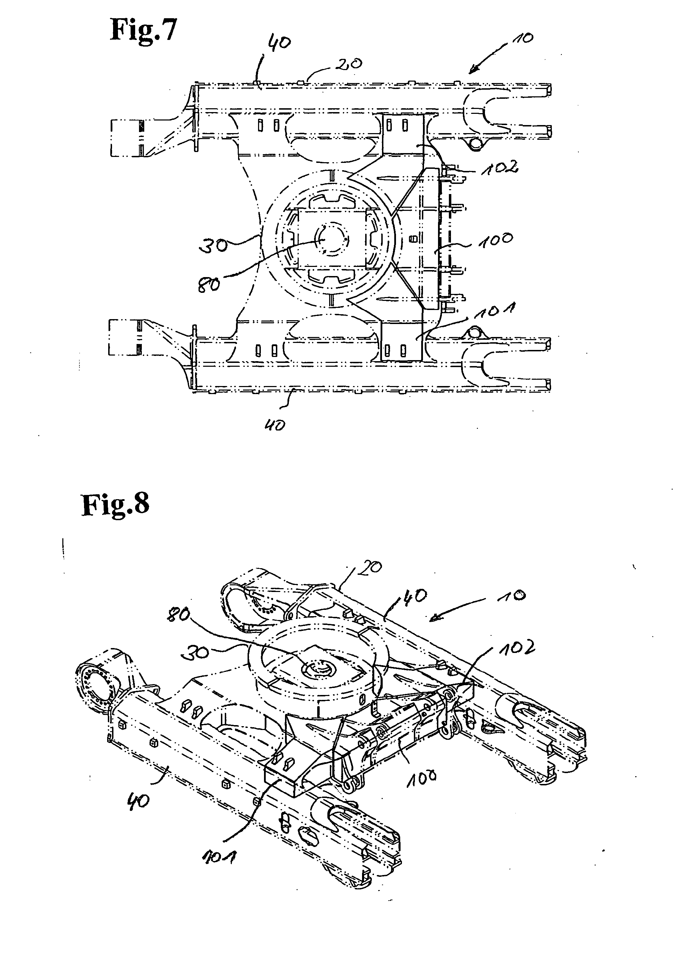

Die Ausgestaltungsvariante des Raupenbaggers 10 aus den Figuren 7 und 8 zeigt eine Variante, in der der Kraftstofftank 100 als integriertes Volumen innerhalb Teilen des Unterwagens 20 vorgesehen ist. Dabei wurden die einzelnen Hohlbereichteile 100, 101, 102 des Unterwagens 20 durch Dichtschweißen abgedichtet und sind somit mit Kraftstoff befüllbar. Auch hier gilt, dass die einzelnen Hohlkammern miteinander verbunden sein können bzw. sich zu einem großen Hohlraum zur Aufnahme von Kraftstoff ergänzen oder mittels beispielsweise eingesetzter Trennwände oder entsprechend des Ausgangszustands des Unterwagens 2 voneinander getrennt bzw. abgedichtet sind. Durch diese bevorzugte Variante ergibt sich im Vergleich zu der Ausführungsvariante aus den Figuren 5 und 6 bzw. Figuren 3 und 4 eine erhebliche Platzersparnis durch die Verlagerung des Kraftstofftanks innerhalb des Unterwagens 20. Ebenfalls kann dadurch eine massive Gewichtseinsparung erreicht werden, da das Gewicht eines zusätzlich angeordneten Kraftstoffbehälters 60 bzw. 90, 91, 92 ausgespart werden kann.

Die Versorgung des Verbrennungsmotors, der im Oberwagen des Mobilbaggers 1 bzw. der Raupenbagger 10 angeordnet ist, kann durch eine innerhalb des Drehkranzes 3, 30 angeordnete Kraftstoffversorgungsleitung 8, 80 erfolgen. Weiterhin kann im Unterwagen eine Kraftstoffpumpe angeordnet sein, die beispielsweise zyklisch, periodisch oder kontinuierlich den Kraftstoff aus dem Kraftstoffbehälter 6, 60, 90, 91, 92 bzw. Kraftstofftank 100, 101, 102 im Unterwagen 2, 20 über die Versorgungsleitungen 8, 80 innerhalb des Drehkranzes 3, 30 in den Oberwagen des Mobilbaggers 1 bzw. des Raupenbaggers 10 pumpt. Der in den Oberwagen beförderte Kraftstoff kann entweder direkt dem im Oberwagen angeordneten Verbrennungsmotor zugeführt werden, ebenfalls ist eine Zwischenpufferung des in den Oberwagen beförderten Kraftstoffes in einem Kraftstoffzwischentank denkbar, welcher zusätzlich im Oberwagen angeordnet ist.

## Patentansprüche

1. Bagger, mit einem Unterwagen, einem Oberwagen und einem im oder am Oberwagen angeordneten Verbrennungsmotor zum Antrieb des Baggers,
**dadurch gekennzeichnet,**
**dass** wenigstens ein Kraftstofftank zur Versorgung des Verbrennungsmotors mit Kraftstoff im oder/und am Unterwagen des Baggers angeordnet ist.

2. Bagger gemäß Anspruch 1, **dadurch gekennzeichnet, dass** wenigstens ein Kraftstoffbehälter außerhalb am Unterwagen des Baggers angeordnet ist.

3. Bagger gemäß Anspruch 1 oder 2, **dadurch gekennzeichnet, dass** wenigstens ein Kraftstoffbehälter zumindest teilweise in den Unterwagen integriert ist.

4. Bagger gemäß Anspruch 1,2 oder 3, **dadurch gekennzeichnet, dass** wenigstens ein Kraftstoffbehälter zumindest teilweise in beliebige Anbauteile des Unterwagens integriert ist.

5. Bagger gemäß einem der vorangegangenen Ansprüche, **dadurch gekennzeichnet, dass** mindestens ein Kraftstofftank als integriertes Volumen innerhalb Teilen des Unterwagens oder innerhalb des gesamten Unterwagens oder/und innerhalb beliebiger Anbauteile des Unterwagens vorgesehen ist.

6. Bagger gemäß Anspruch 5, **dadurch gekennzeichnet, dass** das integrierte Volumen mittels Dichtschweißen von Teilen des Unterwagens, des gesamten Unterwagens und/oder dessen Anbauteilen abgedichtet ist und mit Kraftstoff befüllbar ist.

7. Bagger gemäß einem der vorangegangenen Ansprüche, **dadurch gekennzeichnet, dass** vom Unterwagen des Baggers wenigstens eine Kraftstoffversorgungsleitung zum im Oberwagen angeordneten Verbrennungsmotor geführt ist.

8. Bagger gemäß einem der vorangegangenen Ansprüche, **dadurch gekennzeichnet, dass** wenigstens eine Kraftstoffpumpe im Unterwagen angeordnet und mit dem Kraftstofftank/Kraftstoffbehälter im Unterwagen unmittelbar/mittelbar verbunden ist.

9. Bagger gemäß einem der vorangegangenen Ansprüche, **dadurch gekennzeichnet, dass** der Verbrennungsmotor im Oberwagen angeordnet ist und der Kraftstoff periodisch oder zyklisch vom Kraftstofftank/Kraftstoffbehälter zum Verbrennungsmotor beförderbar ist.

10. Bagger gemäß einem der vorangegangenen Ansprüche, **dadurch gekennzeichnet, dass** der Verbrennungsmotor im Oberwagen angeordnet ist und der Kraftstoff kontinuierlich vom Kraftstofftank/Kraftstoffbehälter zum Verbrennungsmotor beförderbar ist.

11. Bagger gemäß einem der vorangegangenen Ansprüche, **dadurch gekennzeichnet, dass** im Oberwagen mindestens ein Kraftstoffzwischentank angeordnet ist.

12. Bagger gemäß Anspruch 10, **dadurch gekennzeichnet, dass** der Verbrennungsmotor im Oberwagen angeordnet ist und der Kraftstoff periodisch oder zyklisch vom Kraftstofftank/Kraftstoffbehälter im Unterwagen zum Kraftstoffzwischentank im Oberwagen beförderbar ist.

13. Bagger gemäß Anspruch 10, **dadurch gekennzeichnet, dass** der Verbrennungsmotor im Oberwagen angeordnet ist und der Kraftstoff kontinuierlich vom Kraftstofftank/Kraftstoffbehälter im Unterwagen zum Kraftstoffzwischentank im Oberwagen beförderbar ist.

14. Bagger gemäß einem der vorangegangenen Ansprüche, **dadurch gekennzeichnet, dass** der Bagger als ein Raupenkran ausgeführt ist und der im Unterwagen integrierte Kraftstofftank das Volumen des Unterwagens zwischen den Raupenschiffen erschließt und/oder wenigstens ein Kraftstoffbehälter am Unterwagen zwischen den Raupenschiffen angeordnet ist.

15. Bagger gemäß einem der Ansprüche 1 bis 12, **dadurch gekennzeichnet, dass** der Bagger als ein Mobilbagger ausgeführt ist und jeweils ein Kraftstoffbehälter zwischen der Vorder- und Hinterachse seitlich am Unterwagen des Autobaggers angeordnet ist.
